(19) Europäisches Patentamt

European Patent Office

Office européen des brevets

(11) Veröffentlichungsnummer: **0 173 225**
**B1**

(12) **EUROPÄISCHE PATENTSCHRIFT**

(45) Veröffentlichungstag der Patentschrift:
**24.05.89**

(21) Anmeldenummer: **85110426.5**

(22) Anmeldetag: **20.08.85**

(51) Int Cl.⁴: **A 01 F 12/44**, A 01 D 41/12

(54) Mähdrescher mit einer nach dem Axialflussprinzip arbeitenden Trennvorrichtung.

(30) Priorität: **29.08.84 US 646393**

(43) Veröffentlichungstag der Anmeldung:
**05.03.86 Patentblatt 86/10**

(45) Bekanntmachung des Hinweises auf die Patenterteilung:
**24.05.89 Patentblatt 89/21**

(84) Benannte Vertragsstaaten:
**BE DE FR GB IT**

(56) Entgegenhaltungen:
**DE-A- 2 503 693**
**US-A- 4 408 618**

(73) Patentinhaber: **DEERE & COMPANY, 1 John Deere Road,
Moline Illinois 61265 (US)**

㊸ Erfinder West, Neil L., 6914 Valley Drive, Bettendorf
Iowa 52722 (US)
Erfinder: **Vogelaar, Bernard Francis, 3721 - 39th Street,
Moline Illinois 61265 (US)**

(74) Vertreter: **Feldmann, Bernhard, DEERE & COMPANY
European Office, Patent Department
Steubenstrasse 36-42 Postfach 503,
D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Mähdrescher mit einer nach dem Axialflussprinzip arbeitenden Trennvorrichtung, die aus einem zylinderförmigen Trenngehäuse gebildet ist, durch das eine Kurbelwelle mit zahlreichen sich mit Bezug auf die Axialrichtung des Trenngehäuses radial erstreckenden lösbaren Fingern geführt ist, die auf der Kurbelwelle hintereinander angeordneten, schräg gestellten Lagerelementen drehbar gelagert und antreibbar sind.

Es ist bereits ein Mähdrescher der eingangs aufgeführten Art bekannt (US-A 4 408 618), der mit einer quer zur Bewegungsrichtung des Erntegutes angeordneten Dreschtrommel ausgerüstet ist, der eine nach dem Axialflussprinzip arbeitende Trennvorrichtung nachgeschaltet ist, die aus einem feststehenden Gehäuse gebildet ist, in dem eine Kurbelwelle mit exzentrisch angeordneten Wellenabschnitten vorgesehen ist. Auf den einzelnen Wellenabschnitten sind Finger mittels Taumelscheiben drehbar gelagert. Der Antrieb der Kurbelwelle erfolgt über einen Kettentrieb, der hierzu einenends mit der Kurbelwelle verbunden ist. Durch Drehen der Kurbelwelle wird die Taumelscheibe angetrieben und somit eine Schwenkbewegung der einzelnen Finger in Axialrichtung der Kurbelwelle ausgeführt. Damit die einzelnen Finger auch eine Drehbewegung ausführen können, ist auf der Kurbelwelle eine Antriebstrommel drehbar gelagert, die ebenfalls antreibbar ist, so dass man eine relativ aufwendige Vorrichtung erhält. Darüber hinaus weist eine jede Taumelscheibe zahlreiche sich radial erstreckende Finger auf, die mit einem äusseren Kranz der Taumelscheibe fest verbunden sind und die mit Bezug auf die Umfangsrichtung mit Abstand zueinander angeordnet sind. Der Nachteil, auf einem einzigen Kranz zahlreiche Finger mit Abstand zueinander anzuordnen, besteht darin, dass die Finger im wesentlichen alle den gleichen Weg beschreiben. Um eine Verbesserung der Behandlung des Erntegutes zu erreichen, müssten die Finger axial untereinander versetzt sein. Dies ist jedoch bei einer derartigen Anordnung nicht möglich. Der Antrieb der einzelnen Finger mit der zylinderförmig ausgebildeten Antriebsvorrichtung führt zu ungleichmässiger Beschleunigung der Finger, da die Taumelscheibe bzw. die Lagerelemente exzentrisch zur zylinderförmigen Antriebsvorrichtung verlaufen. Die ungleichmässige Beschleunigung zwischen dem Einfahren und dem Ausfahren der Finger führt auch zu relativ breiten Schlitzen in der Antriebsvorrichtung zur Aufnahme bzw. zur Abstützung der Finger, so dass erhebliche Vibrationen im Arbeitseinsatz auftreten können. Relativ grosse Schlitze innerhalb der Antriebsvorrichtung zur Aufnahme der Finger führen auch dazu, dass Erntegut innerhalb der Antriebsvorrichtung eindringt. Ferner ist die gemeinsame Montage mehrerer Finger auf einem Kranz der Taumelscheibe ungünstig, da bei einer Beschädigung eines Fingers auch die übrigen Finger zusammen mit dem Kranz ausgewechselt werden müssen.

Demgegenüber liegt der Erfindung die Aufgabe zugrunde, die Trennvorrichtung mit den intermittierend arbeitenden Fingern derart auszubilden und anzuordnen, dass sie auf einfache Weise auf der Welle montiert werden, wobei in Umfangsrichtung sowie in Axialrichtung eine leichte Verstellmöglichkeit für die Finger gewährleistet ist. Diese Aufgabe ist dadurch gelöst worden, dass nur ein Finger auf jedem separaten Lagerelement angeordnet ist. Durch die Verwendung eines einzelnen Lagerelementes für einen jeden Finger besteht die Möglichkeit, die Finger auf einfache Weise in Umfangsrichtung mit Abstand zueinander anzuordnen und auch axial derart zu verschieben, dass eine optimale Behandlung des in der Trennvorrichtung aufgenommenen Erntegutes sowie ein weiterer Transport gewährleistet sind. Da die einzelnen Finger nebeneinander angeordnet sind, kann durch entsprechend grossen axialen Abstand auch die spiralförmige Bewegungsbahn des Erntegutes durch das Gehäuse entsprechend beeinflusst werden. Hierzu ist es vorteilhaft, dass die Rotationskreise der Finger derart verlaufen, dass das von den Fingern erfasste Erntegut sich spiralförmig durch das Trenngehäuse bewegt, wobei eine die Kurbelwelle zylinderförmig umgebende Antriebsvorrichtung gegen die Finger anlegbar ist und diese antreibt. Damit die Finger intermittierend in das Erntegut eintauchen, ist es vorteilhaft, dass die Anlagestelle eines Fingers und die Anlagestelle eines benachbarten Fingers an der Antriebsvorrichtung in Umfangsrichtung 90° versetzt liegen, wobei jeder Rotationskreis einen Teil der Länge des Trenngehäuses überspannt, benachbarte Rotationskreise sich überlappen und parallel zueinander verlaufen. Eine leichte Montage der Finger wird auch dadurch erreicht, dass ein jeder Finger eine teilbare Nabe aufweist, die auf dem Lagerelement drehbar gelagert ist, wobei ein jeder Finger sich von der Nabe radial nach aussen erstreckt und parallel zu der durch die Nabe gebildeten Rotationsebene verläuft. Durch die Verwendung einer teilbaren Nabe lässt sich ein einzelner Finger mit der zugehörigen Nabe axial auf die Welle aufsetzen, so dass beschädigte Finger in kürzester Zeit ohne weiteres ausgewechselt werden können. Um einen gleichmässigen Antrieb der Finger zu gewährleisten, ist es vorteilhaft, dass das Lagerelement mit der Kurbelwelle drehfest verbindbar ist. Hierzu ist es vorteilhaft, dass der im Trenngehäuse angeordnete Teil der Kurbelwelle parallel und exzentrisch zur Innenoberfläche des Trenngehäuses verläuft und die auf der Kurbelwelle angeordneten Lagerelemente mit Bezug auf die Kurbelwelle geneigt verlaufen und eine geneigt verlaufende Oberfläche aufweisen, die durch eine stromaufwärts und eine stromabwärts liegende Wand begrenzt wird, wobei die Nabe auf der Oberfläche drehbar gelagert ist. In weiterer Ausgestaltung der Erfindung ist es vorteilhaft, dass die Antriebsvorrichtung zum Antrieb der Finger als Antriebsrahmen ausgebildet ist, der in dem Trenngehäuse auf der Kurbelwelle drehbar gelagert ist, wobei der Antriebsrahmen mit radialem Abstand zur Kurbelwelle angeordnete Mitnehmerleisten aufweist. Vorteilhaft ist es ferner, dass der Radius der durch die Fingerspitzen der Finger gebildeten Rotationskreise nicht kleiner ist als der Radius des Drehkreises der Mitnehmerleisten plus dem Betrag der Exzentrizität der Kurbelwelle und dass der Antriebsrahmen zumindest zwei diametral gegenüberliegende Mitnehmerleisten aufweist und auf einer Achse dreht, die koaxial zur Achse des Trenngehäuses verläuft. Da der Radius der Fingerspitzen in etwa gleich gross ist wie der Radius des Drehkreises der Mitnehmerleisten, wird erreicht, dass die Finger mit konstanter Geschwindigkeit angetrieben werden. Auf jeden Fall ist es vorteilhaft, die Länge der Finger derart gross zu wählen und die Exzentrizität der Finger so auszugestalten, dass während des Arbeitseinsatzes an der Anlagestelle der Finger an der Antriebsvorrichtung eine konstante Antriebsgeschwindigkeit auftritt, so dass die Finger mit gleicher Antriebsgeschwindigkeit in das Erntegut hineintauchen und wieder herausgezogen werden können. Hierzu ist es vorteilhaft, dass der Antriebsrahmen aus zwischen den Mitnehmerleisten vorgesehenen zylinderförmigen Wänden gebildet ist, die gemeinsam mit den Mitnehmerleisten eine die Kurbelwelle zylinderförmig umgebende Mitnehmertrommel bilden, und dass die Mitnehmerleisten sich axial erstreckende Langlochöffnungen zur Aufnahme und Steuerung der Finger aufweisen. Ferner ist es vorteilhaft, dass die Breite der Langlochöffnungen so klein ist, dass eine Relativbewegung in Umfangsrichtung der Mitnehmertrommel zwischen den Fingern und den Mitnehmerleisten verhindert wird. Durch die optimale Bestimmung der Antriebsgeschwindigkeit der Finger aufgrund der entsprechenden Länge der Finger und der Exzentrizität der Kurbelwelle können die Langlochöffnungen relativ schmal ausgebildet sein, so dass in Umfangsrichtung der Mitnehmertrommel kein Spiel zwischen dem Finger und den Langlochöffnungen auftritt. Hierdurch können Geräusche während des Antriebes der Finger reduziert werden.

In weiterer Ausgestaltung der Erfindung ist es vorteilhaft, dass die Finger und die Kurbelwelle derart exzentrisch angeordnet sind, dass die Finger während des Rotationsvorganges in einem Arbeitsbereich von nicht mehr als 270° sich über die Zylinderoberfläche hinaus erstrecken, und dass der Querschnitt der Kurbelwelle und die Bohrung des Lagerelementes zur Aufnahme der Kurbelwelle im Querschnitt nicht kreisförmig ist. Ferner ist es vorteilhaft, dass die Querschnittsform der Welle sowie der Bohrung aus gleichförmigen Prismenflächen gebildet ist und dass die Längsachse des Trenngehäuses und die Drehachse des Mitnehmerrahmens zusammenliegen und dass die Kurbelwelle drehfest im Trenngehäuse angeordnet ist. Da die Welle aus gleichförmigen Prismenteilen zusammengesetzt ist, erhält man eine Welle mit mehreren Anlageflächen zur Aufnahme der Taumelscheibe und somit zur Festsetzung der Taumelscheibe bzw. des entsprechenden Lagerelementes in Umfangsrichtung. Die Welle kann beispielsweise als Dreikant-, Vierkant- oder Sechskantwelle ausgebildet sein. Je mehr Kanten bzw. Lageroberflächen die Welle aufweist, je mehr Verstellmöglichkeiten der einzelnen Lagerelemente zur Aufnahme der Finger in Umfangsrichtung erhält man. Somit lassen sich die Finger auf einfache Weise in Umfangsrichtung mit Abstand zueinander anordnen.

Im folgenden wird die Erfindung anhand von lediglich einen Ausführungsweg darstellenden Zeichnungen näher erläutert. Es zeigt:

Fig. 1 eine schematische Darstellung eines Mähdreschers mit einer quer zur Bewegungsrichtung des Erntegutes angeordneten Dreschtrommel und einer nach dem Axialflussprinzip arbeitenden Trennvorrichtung,

Fig. 2 einen Querschnitt entlang der Linie 2–2 gemäss Fig. 1,

Fig. 3 eine Teilansicht in der Ansicht entlang der Linie 3–3 gemäss Fig. 2,

Fig. 4 die Lagerung eines Fingers mittels einer Taumelscheibe.

In der Zeichnung ist mit 10 das Gehäuse eines Mähdreschers bezeichnet, der auf Laufrädern 12 und steuerbaren Rädern 14 abgestützt ist. An der Stirnseite des Mähdreschers befindet sich eine Fahrerkabine 16 über einer Erntebergungsvorrichtung 18 mit einem Schrägförderer 20. Die Schneidwerksvorrichtung ist der Einfachheit halber nicht dargestellt. Das von der Erntebergungsvorrichtung 18 aufgenommene Erntegut wird einer Dreschtrommel 22 zugeführt, die über einem Dreschkorb 24 angeordnet ist. Von dort aus gelangt das Erntegut über eine der Dreschtrommel 22 nachgeschaltete Strohleittrommel 26 zu einer nach dem Axialflussprinzip arbeitenden Trennvorrichtung 28. Der unter dem Dreschkorb vorgesehene Auffangteil zur Aufnahme des ausgedroschenen Erntegutes sowie die unterhalb der Trennvorrichtung 28 vorgesehene Reinigungsvorrichtung sind der Einfachheit halber nicht dargestellt. Das gereinigte Erntegut gelangt in einen im Mähdrescher vorgesehenen Sammelbehälter und wird über eine Entleerungsvorrichtung 30 an ein entsprechendes Fahrzeug abgegeben.

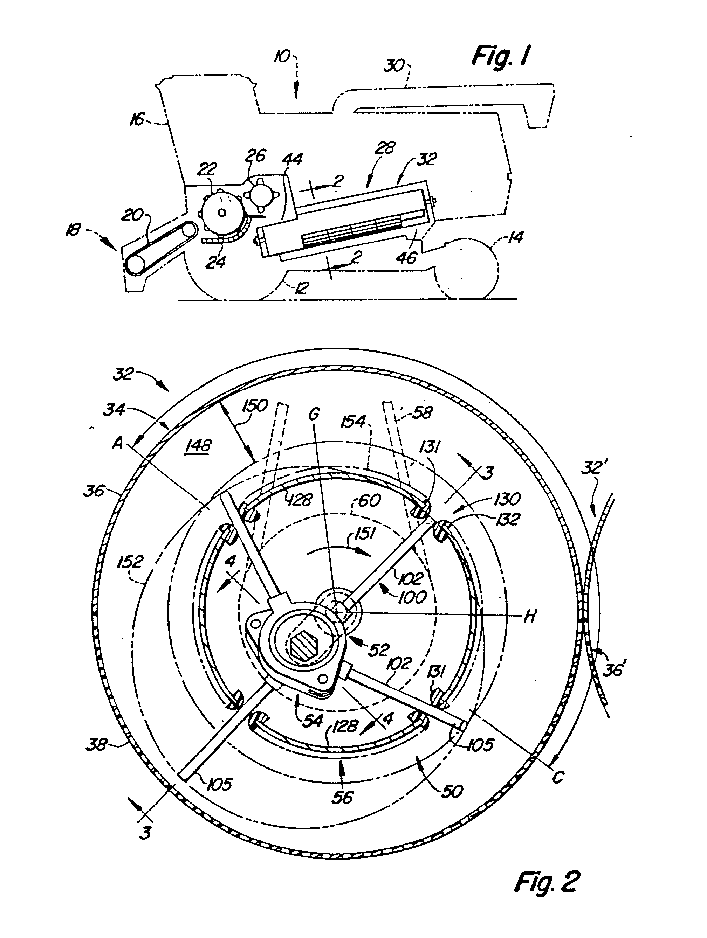

In der Zeichnung ist in Fig. 1 lediglich eine Trennvorrichtung 28 dargestellt. Es ist jedoch auch möglich, wie in Fig. 2 angedeutet, neben der ersten Trennvorrichtung 28 auch eine weitere Trennvorrichtung im Mähdrescher vorzusehen.

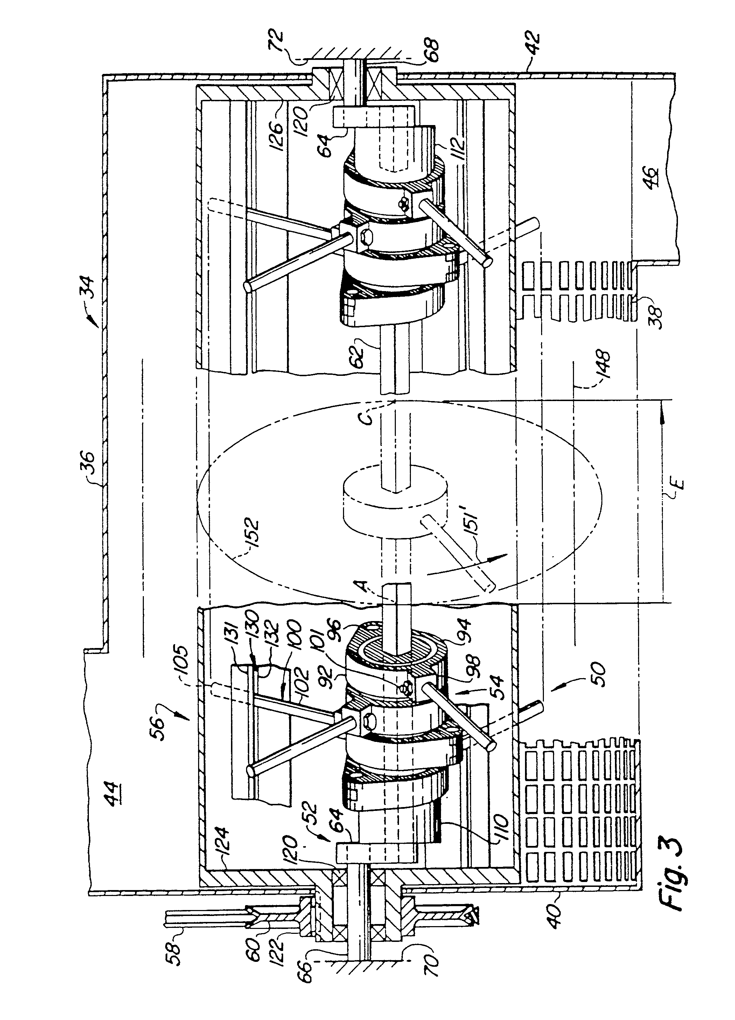

Wie aus Fig. 2 und 3 hervorgeht, weist die Trennvorrichtung 28 ein linkes Trenngehäuse 32 und ein in Fig. 2 nur angedeutetes rechtes Trenngehäuse 32' auf. Das Trenngehäuse 32 bzw. 32' ist aus einer zylinderförmigen Wand 36 bzw. 36' gebildet. Im Trennbereich der Trennvorrichtung 28 befindet sich ein Trennsieb 38, das etwa halbkreisförmig ausgebildet ist und einen Rotor 50 umgibt. Das Trenngehäuse 32 wird innenseitig durch eine Stirnwand 40 bzw. eine Rückwand 42 abgedichtet. Die Stirnwand 40 bildet gemeinsam mit dem an die Wand heranreichenden halbkreisförmig ausgebildeten Trennsieb 38 eine nach oben gerichtete, in etwa rechteckförmig ausgebildete Einlassöffnung 44, über die das Erntegut von oben her dem Rotor 50 zugeführt wird. Im Bereich der Rückwand 42 befindet sich im Trennsieb 38 eine nach unten gerichtete Auslassöffnung 46, über die das ausgedroschene Stroh bzw. Kaffteile auf den Boden abgegeben werden.

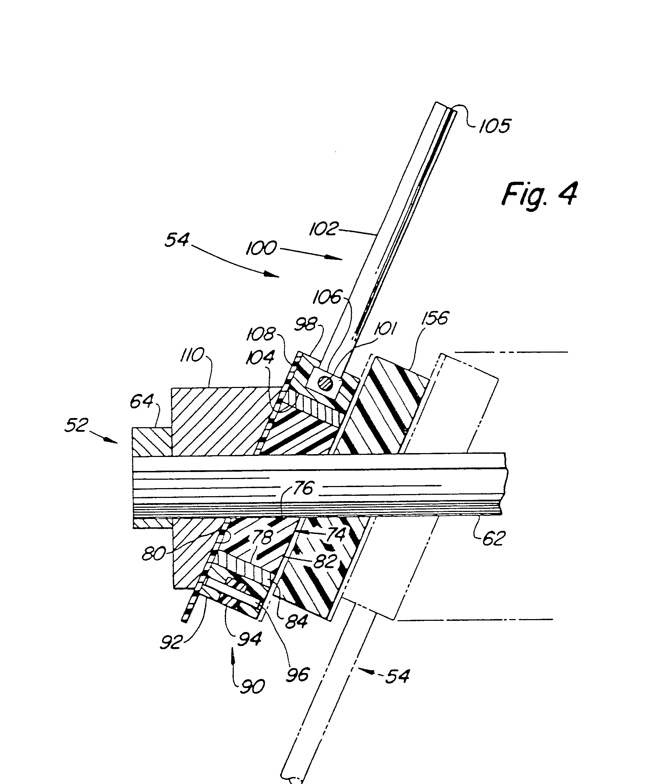

Der Rotor 50 weist eine gekröpfte Kurbelwelle 52 auf, auf der zahlreiche Förderelemente 54 drehbar bzw. allseitig verstellbar gelagert sind. Auf der Kurbelwelle 52 ist zum Antrieb der Förderelemente 54 eine Mitnehmertrommel 56 drehbar gelagert. Die Mitnehmertrommel 56 weist einenends eine Riemenscheibe 60 auf, die über einen Zugmittelriemen 58 mit einer in der Zeichnung nicht dargestellten Antriebsvorrichtung wirkungsmässig verbunden ist. Der mittlere Teil der Kurbelwelle 52 besteht aus einer Sechskantwelle 62, die in etwa der Länge der Trennvorrichtung 28 entspricht. Am linken und rechten Ende der Sechskantwelle 62 ist je ein Kröpfteil 64 vorgesehen, an den ein Wellenzapfen 66 bzw. 68 angeschlossen ist. Die beiden Wellenzapfen 66 und 68 sind in einer Front- und einer Rückwand 70, 72 des Gehäuses 10 fest angeordnet. Die Förderelemente 54 bestehen aus je einer Taumelscheibe mit einem Lagerelement 74, das eine Sechskantbohrung 76 aufweist, so dass das Lagerelement 74 auf die Sechskantwelle 62 aufgeschoben werden kann (siehe Fig. 4). Das Lagerelement 74 weist eine äussere Ringfläche bzw. Lagerfläche 78 sowie eine stromabwärts gerichtete Lagerfläche 80 und eine stromaufwärts gerichtete Lagerfläche 82 auf, die als Anlageflächen für benachbarte Anlageteile dienen können. Auf der Lagerfläche 78 sitzt ein Lagerring bzw. eine Lagerbuchse 84, die sich auf der Lageroberfläche 78 dreht.

Auf der Lagerbuchse sitzt ferner eine Nabe 90, die aus zwei Nabenhälften 92 und 94 gebildet ist, die mittels eines Gelenkes 96 zusammengehalten sind. Diametral gegenüber dem Gelenk 96 befindet sich eine Sacklochöffnung 98, die zur Aufnahme eines Fingers 100 dient, der in der Sacklochöffnung 98 mittels eines Bolzens 101 gesichert ist, der auch die beiden Nabenhälften 92 und 94 zusammenhält, so dass die zylindrische Innenoberfläche 104 die Lagerbuchse 84 umschliesst. Der Finger 100 erstreckt sich von der Lagerfläche 78 und der Oberfläche 104 radial nach aussen. Der Finger weist einen Fingerschaft 102 auf, der endseitig mit einer Fingerspitze 105 versehen ist. Der äussere Teil des Fingerschaftes 102 erstreckt sich durch in der Mitnehmertrommel 56 vorgesehene Öffnungen 130, während der innere Teil des Fingerschaftes als Vierkantfuss 106 ausgebildet ist, der in der Sacklochöffnung 98 aufgenommen und mittels des Bolzens 101 gesichert ist.

Wie aus Fig. 3 hervorgeht, sind zahlreiche Förderelemente 54 auf der Sechskantwelle 62 nebeneinander angeordnet, die mit Bezug auf die Gesamtlänge des Trenngehäuses 32 die gesamte Länge einnehmen. In Fig. 4 ist die Anordnung und Lagerung des Fingers 100 genauer veranschaulicht. Die Förderelemente sind auf der Sechskantwelle aufgeschraubt und mit ihr drehfest verbunden, d.h. dass auf dem Lagerelement 74 die Nabe 90 dreht. An der linken Oberfläche 104 befindet sich eine Lagerscheibe 108, die jeweils an die nächste anliegende Taumelscheibe angrenzt. Ein Endstück bzw. Zwischenstück 110 bzw. 112 liegt gegen das jeweils ganz aussen liegende Förderelement bzw. gegen die entsprechende Lagerscheibe 108 an und verhindert eine axiale Verschiebung der einzelnen Taumelscheiben. Die Mitnehmertrommel 56 umgibt die Kurbelwelle 52 und ist endseitig mittels Lager, die beispielsweise als Wälzlager 120 ausgebildet sein können, auf den Zapfen 66 und 68 drehbar gelagert. Die Riemenscheibe 60 ist mittels einer Nabe 122 auf der Nabe der Mitnehmertrommel angeordnet und mit dieser drehfest verbunden. Die Mitnehmertrommel 56 ist zylinderförmig ausgebildet und endseitig mittels einer Stirnwand 124 bzw. 126 verschlossen, an der auch die Naben zur Aufnahme der Wälzlager 120 angeordnet sind. Die Mitnehmertrommel 56 besteht aus vier gleichförmig ausgebildeten, segmentartigen Wandteilen 128. Die aneinander anstossenden Stirnkanten der Wandteile 128 bilden vier in Axialrichtung der Welle 62 sich erstreckende Langlochöffnungen 130, die mit gleichem Abstand zueinander angeordnet sind. Die einander gegenüberliegenden Kanten der Langlochöffnungen 130 sind mit halbkreisförmigen Gleitelementen 131, 132 versehen, die sich über die gesamte Länge der Langlochöffnung erstrecken. Die Länge der Langlochöffnung 130 ist so gewählt, dass die Finger 100 ausreichend seitlich hin und her schwingen können.

Im Arbeitseinsatz wird das Erntegut aus der Dreschvorrichtung über die Strohleittrommel 26 von oben her in die Einlassöffnung 44 der Trennvorrichtung 28 aufgegeben und gelangt somit in das Trenngehäuse 32. Dort wird das Erntegut von den Förderelementen 54 erfasst und spiralförmig durch den Trennteil 34 des Trenngehäuses 32 bewegt. Der Rotor 50 wird mit einer derartigen Geschwindigkeit angetrieben, so dass das Erntegut aufgrund der dadurch auftretenden Zentrifugalkräfte in einer ringförmigen Erntegutmatte 148 an der Innenoberfläche der Wand 36 spiralförmig entlang bewegt wird. Die Stärke der Erntegutmatte ist in Fig. 2 durch die Bezugszahl 150 angegeben. Die Finger 100 können mit an der Innenoberfläche der Wand 36 vorgesehenen in der Zeichnung jedoch nicht dargestellten spiralförmigen Förderrippen zusammenwirken, die den Transport des Erntegutes zur Auslassöffnung 46 unterstützen.

Das direkte Antriebselement für den Rotor 50 ist die Mitnehmertrommel 56 bzw. die Gleitelemente 131, 132. Die Drehrichtung ist durch die Pfeile 151 und 151' in Fig. 2 und 3 angedeutet. Der effektive äussere Durchmesser der Mitnehmertrommel 56, die exzentrische Anordnung der Förderelemente 54 mit Bezug auf das Trenngehäuse 32 und der Schwenkradius der Fingerspitzen 105 sind so gewählt, dass beim Drehen des Rotors 50 die Finger ständig in den Langlochöffnungen 130 geführt werden, während sie gleichzeitig um die Drehachse der Sechskantwelle 62 gedreht werden. Obwohl es nicht unbedingt notwendig ist, kann die Mitnehmertrommel 56 konzentrisch im Trennteil 34 angeordnet sein.

Der Rotationskreis 152 der Fingerspitzen 105 ist mit Bezug auf die Längsachse des Trennteiles 34 geneigt verlaufend angeordnet (siehe Fig. 2, 3 und 4). Die Abmessungen der Trennvorrichtung 28 sowie die Fördergeschwindigkeit des Erntegutes sind so gewählt, dass die Finger 100 in die Erntegutmatte nur über einen bestimmten Bereich in das Erntegut eintauchen. Dieser Bereich ist in Fig. 2 durch die Buchstaben A und C abgegrenzt. In dem oberen Bereich zwischen den Buchstaben A und C greifen die Finger 100 nicht in das Erntegut ein. Die beiden Bereiche beschreiben ein Bogenmass von ca. 180°. Der Steigungswinkel bzw. die Schrägstellung des Rotationskreises 152 mit Bezug auf die Längsachse der Kurbelwelle 62 ist durch den Buchstaben E angedeutet (siehe Fig. 3).

Das Zurückziehen der Finger 100 mit Bezug auf die Zylinderoberfläche 154 der Mitnehmertrommel 56 geschieht durch Drehen der Mitnehmertrommel 56. Aus Fig. 2 ist der Rotationskreis 152 der Fingerspitzen 105 zu entnehmen. In dem Bereich zwischen G und H liegen die Fingerspitzen 105 innerhalb der Mitnehmertrommel 56 und somit innerhalb der äusseren Zylinderoberfläche 154. Der Winkel zwischen den Abschnitten G und H liegt bei ca. 90° oder mehr.

Die gekröpfte Ausbildung der Kurbelwelle 52 ergibt die Exzentrizität der Sechskantwelle 62 gegenüber dem Trennteil 34 (Fig. 2), da bei diesem Ausführungsbeispiel die Sechskantwelle 62 fest im Trenngehäuse 32 angeordnet ist, um auf diese Weise zu gewährleisten, dass die Finger 100 nur über einen bestimmten Bereich in das Erntegut eintauchen. Die Verwendung einer Sechskantwelle gestattet ferner die einfache Festsetzung der Taumelscheiben sowie der zugehörigen Lagerelemente 74. Jedoch ist es auch möglich, diese Lagerblöcke mittels Nut und Federn auf einer Welle zu sichern.

Die Umfangsgeschwindigkeit bzw. die durch die Finger 100 hervorgerufenen Zentrifugalkräfte, die auf das Erntegut übertragen werden, hängen von der Geschwindigkeit der Mitnehmertrommel 56 ab. Die Mitnehmertrommel 56 wird jeweils so schnell angetrieben, dass das Erntegut in der ringförmigen Erntegutmatte 148 durch das Gehäuse bewegt wird. Die axiale Verschiebung des Erntegutes durch den Trennteil 34 hängt von der Schrägstellung des Rotationskreises 152 sowie der Relativbewegung zwischen den Fingern 100 und der Mitnehmertrommel 56 ab.

Um den Reibungswiderstand an der Lagerfläche 78 sowie der Oberfläche 104 zu reduzieren, wenn sich das Erntegut durch den Trennteil 34 bewegt, kann die Oberfläche mit entsprechendem Schmiermittel, beispielsweise pulverigem Metall, behandelt werden. Die geteilte Ausführung der Nabe 90 zur Aufnahme der Finger 100 vermindert die Montagekosten sowie den Austausch der Finger, wenn diese beschädigt werden. Somit braucht lediglich die Nabe 90 mittels des Bolzens 101 gesichert zu werden.

Um eine ausreichende Behandlung des Erntegutes im Trennteil 34 zu erreichen, ist es vorteilhaft, wenn beispielsweise vier Finger gemäss Fig. 2 in jeweils vier Langlochöffnungen 130 geführt sind. Dabei ist es vorteilhaft, wenn der Winkel zwischen den Fingern in etwa 90° gross ist. Der axiale Abstand zwischen den einzelnen Taumelscheiben und somit den Fingerspitzen 105 kann durch die Verwendung unterschiedlich starker Distanzscheiben 156 variiert werden (siehe Fig. 4).

Besonders vorteilhaft ist es, wenn die Finger 100 ständig in den Langlochöffnungen 130 geführt werden, gleich ob sie ein- oder ausgefahren sind. Somit können Geräusche und Vibrationen der Finger 100 beim Arbeitseinsatz vermieden werden.

**Patentansprüche**

1. Mähdrescher mit einer nach dem Axialflussprinzip arbeitenden Trennvorrichtung (28), die aus einem zylinderförmigen Trenngehäuse (32) gebildet ist, durch das eine Kurbelwelle (52) mit zahlreichen sich mit Bezug auf die Axialrichtung des Trenngehäuses (32) radial erstreckenden lösbaren Fingern (100) geführt ist, die auf auf der Kurbelwelle (52) hintereinander angeordneten, schräg gestellten Lagerelementen (74) drehbar gelagert und antreibbar sind, dadurch gekennzeichnet, dass nur ein Finger (100) auf jedem separaten Lagerelement (74) angeordnet ist.

2. Mähdrescher nach Anspruch 1, wobei die Fingerspitzen (105) Rotationskreise (152) beschreiben, dadurch gekennzeichnet, dass die Rotationskreise (152) der Finger (100) derart verlaufen, dass das von den Fingern erfasste Erntegut sich spiralförmig durch das Trenngehäuse (32) bewegt, wobei eine die Kurbelwelle (52) zylinderförmig umgebende Antriebsvorrichtung gegen die Finger (100) anlegbar ist und diese antreibt.

3. Mähdrescher nach Anspruch 1 oder 2, dadurch gekennzeichnet, dass die Anlagestelle eines Fingers (100) und die Anlagestelle eines benachbarten Fingers (100) an der Antriebsvorrichtung in Umfangsrichtung 90° versetzt liegen, wobei jeder Rotationskreis (152) einen Teil der Länge des Trenngehäuses (32) überspannt, benachbarte Rotationskreise sich überlappen und parallel zueinander verlaufen.

4. Mähdrescher nach einem oder mehreren der vorherigen Ansprüche, dadurch gekennzeichnet, dass ein jeder Finger (100) eine teilbare Nabe (90) aufweist, die auf dem Lagerelement (74) drehbar gelagert ist, wobei ein jeder Finger sich von der Nabe radial nach aussen erstreckt und parallel zu der durch die Nabe gebildeten Rotationsebene verläuft.

5. Mähdrescher nach einem oder mehreren der vorherigen Ansprüche, dadurch gekennzeichnet, dass das Lagerelement (74) mit der Kurbelwelle (52) drehfest verbindbar ist.

6. Mähdrescher nach einem oder mehreren der vorherigen Ansprüche, dadurch gekennzeichnet, dass der im Trenngehäuse (32) angeordnete Teil der Kurbelwelle (52) parallel und exzentrisch zur Innenoberfläche des Trenngehäuses (32) verläuft und die auf der Kurbelwelle angeordneten Lagerelemente (74) mit Bezug auf die Kurbelwelle (52) geneigt verlaufen und eine geneigt verlaufende Oberfläche aufweisen, die durch eine stromaufwärts und eine stromabwärts liegende Wand (80, 82) begrenzt wird, wobei die Nabe (90) auf der Oberfläche drehbar gelagert ist.

7. Mähdrescher nach einem oder mehreren der vorherigen Ansprüche, dadurch gekennzeichnet, dass die Antriebsvorrichtung zum Antrieb der Finger (100) als Antriebsrahmen ausgebildet ist, der in dem Trenngehäuse (32) auf der Kurbelwelle (52) drehbar gelagert ist, wobei der Antriebsrahmen mit radialem Abstand zur Kurbelwelle (52) angeordnete Mitnehmerleisten (Gleitelemente 132) aufweist.

8. Mähdrescher nach einem oder mehreren der vorherigen Ansprüche, dadurch gekennzeichnet, dass der Radius der durch die Fingerspitzen (105) der Finger (100) gebildeten Rotationskreise (152) nicht kleiner ist als der Radius des Drehkreises der Mitnehmerleisten (Gleitelemente 132) plus dem Betrag der Exzentrizität der Kurbelwelle.

9. Mähdrescher nach einem oder mehreren der vorherigen Ansprüche, dadurch gekennzeichnet, dass der Antriebsrahmen zumindest zwei diametral gegenüberliegende Mitnehmerleisten (131, 132), aufweist und auf einer Achse dreht, die koaxial zur Achse des Trenngehäuses (32) verläuft.

10. Mähdrescher nach einem oder mehreren der vorherigen Ansprüche, dadurch gekennzeichnet, dass der Antriebsrahmen aus zwischen den Mitnehmerleisten vorgesehenen zylinderförmigen Wänden (128) gebildet ist, die gemeinsam mit den Mitnehmerleisten eine die Kurbelwelle (52) zylinderförmig umgebende Mitnehmertrommel (56) bilden.

11. Mähdrescher nach einem oder mehreren der vorherigen Ansprüche, dadurch gekennzeichnet, dass die Mitnehmerleisten sich axial erstreckende Langlochöffnungen (130) zur Aufnahme und Steuerung der Finger (100) aufweisen.

12. Mähdrescher nach einem oder mehreren der vorherigen Ansprüche, dadurch gekennzeichnet, dass die Breite der Langlochöffnungen so klein ist, dass eine Relativbewegung in Umfangsrichtung der Mitnehmertrommel (56) zwischen den Fingern (100) und den Mitnehmerleisten verhindert wird.

13. Mähdrescher nach einem oder mehreren der vorherigen Ansprüche, dadurch gekennzeichnet, dass die Finger (100) und die Kurbelwelle (52) derart exzentrisch angeordnet sind, dass die Finger während des Rotationsvorganges in einem Arbeitsbereich von nicht mehr als 270° sich über die Zylinderoberfläche (154) hinaus erstrecken.

14. Mähdrescher nach einem oder mehreren der vorherigen Ansprüche, dadurch gekennzeichnet, dass der Querschnitt der Kurbelwelle (52) und die Bohrung des Lagerelementes (74) zur Aufnahme der Kurbelwelle (52) im Querschnitt nicht kreisförmig sind.

15. Mähdrescher nach einem oder mehreren der vorherigen Ansprüche, dadurch gekennzeichnet, dass die Querschnittsform der Welle (52) sowie der Bohrung aus gleichförmigen Prismenflächen gebildet ist.

16. Mähdrescher nach einem oder mehreren der vorherigen Ansprüche, dadurch gekennzeichnet, dass die Längsachse des Trenngehäuses (32) und die Drehachse des Mitnehmerrahmens zusammenliegen und dass die Kurbelwelle (52) drehfest im Trenngehäuse (32) angeordnet ist.

**Claims**

1. Combine harvester with a separator device (28) operating in accordance with the axial flow principle, which is formed from a cylindrical separator housing (32), through which is carried a crankshaft (52) having numerous detachable fingers (100) extending radially with reference to the axial direction of the separator housing (32), which fingers are drivable and rotatably mounted on obliquely positioned bearing elements (74) arranged one after the other on the crankshaft (52), characterized in that only one finger (100) is arranged on each separate bearing element (74).

2. Combine harvester according to claim 1, wherein the fingertips (105) describe circles of rotation (152), characterized in that the circles of rotation (152) of the fingers (100) so run that the crop engaged by the fingers moves spirally through the separator housing (32), wherein a drive device cylindrically surrounding the crankshaft (52) can bear against the fingers (100) and drive these.

3. Combine harvester according to claim 1 or 2, characterized in that the engagement point of one finger (100) and the engagement point of an adjacent finger (100) on the drive device are displaced 90° in the peripheral direction, wherein each circle of rotation (152) extends over part of the length of the separator housing (32), adjacent circles of rotation overlap and run parallel to one another.

4. Combine harvester according to one or more of the preceding claims, characterized in that each finger (100) has a separable hub (90), which is rotatably mounted on the bearing element (74), wherein each finger extends radially outwards from the hub and runs parallel to the plane of rotation formed by the hub.

5. Combine harvester according to one or more of the preceding claims, characterized in that the bearing element (74) is connectable rotation fast to the crankshaft (52).

6. Combine harvester according to one or more of the preceding claims, characterized in that the part of the crankshaft (52) arranged in the separator housing (32) runs parallel and eccentric relative to the inner surface of the separator housing (32) and the bearing elements (74) arranged on the crankshaft extend inclined relative to the crankshaft (52) and have a surface running at an inclination, which is delimited by an upstream and a downstream wall (80, 82), the hub (90) being rotatably mounted on the surface.

7. Combine harvester according to one or more of the preceding claims, characterized in that the drive device for driving the fingers (100) is formed as a drive frame, which is rotatably mounted on the crankshaft (52) in the separator housing (32), the drive frame comprising entrainment strips (slide elements 132) arranged radially spaced relative to the crankshaft (52).

8. Combine harvester according to one or more of the preceding claims, characterized in that the radius of the circle of rotation (152) formed by the fingertips (105) of the fingers (100) is not smaller than the radius of the circle of rotation of the entrainment strips (slide elements 132) plus the amount of the eccentricity of the crankshaft.

9. Combine harvester according to one or more of the preceding claims, characterized in that the drive frame has at least two diametrically opposite entrainment strips (131, 132) and rotates about an axis which runs coaxial to the axis of the separator housing (32).

10. Combine harvester according to one or more of the preceding claims, characterized in that the drive frame is formed from cylindrical walls (128) provided between the entrainment strips, which walls together with the entrainment strips from an entrainment drum (56) cylindrically surrounding the crankshaft (52).

11. Combine harvester according to one or more of the preceding claims, characterized in that the entrainment strips have axially extending slot openings (130) to receive and control the fingers (100).

12. Combine harvester according to one or more of the preceding claims, characterized in that the width of the slot holes is so small that relative movement in the peripheral direction of the entrainment drum (56) between the fingers (100) and the entrainment strips is prevented.

13. Combine harvester according to one or more of the preceding claims, characterized in that the fingers (100) and the crankshaft (52) are arranged eccentrically such that the fingers extend beyond the cylinder surface (154) during the course of rotation in a working zone of not more than 270°.

14. Combine harvester according to one or more of the preceding claims, characterized in that the cross-section of the crankshaft (52) and the bore of the bearing element (74) for receiving the crankshaft (52) are noncircular in cross-section.

15. Combine harvester according to one or more of the preceding claims, characterized in that the cross-sectional form of the shaft (52) as well as of the bore are formed from like-shaped prismatic surfaces.

16. Combine harvester according to one or more of the preceding claims, characterized in that the longitudinal axis of the separator housing (32) and the axis of rotation of the entrainment frame coincide and in that the crankshaft (52) is arranged rotationally fast in the separator housing (32).

## Revendications

1. Moissonneuse-batteuse comportant un dispositif de séparation (28) fonctionnant selon le principe du flux axial, qui est formé par un carter de séparation cylindrique (32) à travers lequel passe un vilebrequin (52) comportant de nombreux doigts amovibles (100) dirigés radialement par rapport à la direction axiale du carter de séparation (32), qui sont montés de façon à pouvoir tourner sur des éléments de support (74) disposés obliquement, placés les uns après les autres sur le vilebrequin (52), et peuvent être entraînés, caractérisé en ce qu'un seul doigt (100) est placé sur chaque élément de support séparé (74).

2. Moissonneuse-batteuse suivant la revendication 1, les bouts (105) des doigts décrivant des cercles de révolution (152), caractérisée en ce que les cercles de révolution (152) des doigts (100) s'étendent de telle façon que les produits de récolte interceptés par les doigts se déplacent en spirale à travers le carter de séparation (32), un dispositif d'entraînement entourant cylindriquement le vilebrequin (52) pouvant être placé contre les doigts (100) et les entraînant.

3. Moissonneuse-batteuse suivant la revendication 1 ou 2, caractérisée en ce que le point de contact d'un doigt (100) et le point de contact d'un doigt (100) voisin avec le dispositif d'entraînement sont décalés en direction périphérique de 90°, chaque cercle de révolution (152) couvrant une partie de la longueur du carter de séparation (32), des cercles de révolution voisins se chevauchant et s'étendant parallèlement l'un à l'autre.

4. Moissonneuse-batteuse suivant une ou plusieurs des revendications précédentes, caractérisée en ce que chaque doigt (100) comporte un moyeu pouvant être divisé (90) qui est monté de façon à pouvoir tourner sur l'élément de support (74), chaque doigt s'étendant radialement vers l'extérieur à partir du moyeu et étant dirigé parallèlement au plan de rotation formé par le moyeu.

5. Moissonneuse-batteuse suivant une ou plusieurs des revendications précédentes, caractérisée en ce que l'élément de support (74) peut être solidarisé en rotation avec le vilebrequin (52).

6. Moissonneuse-batteuse suivant une ou plusieurs des revendications précédentes, caractérisée en ce que la partie du vilebrequin (52) placée dans le carter de séparation (32) s'étend parallèlement et excentriquement par rapport à la surface intérieure du carter de séparation (32) et les éléments de support (74) placés sur le vilebrequin sont inclinés par rapport au vilebrequin (52) et comportent une surface inclinée qui est délimitée par une paroi (80) et une paroi (82) situées en amont et en aval, le moyeu (90) étant monté de façon à pouvoir tourner sur la surface.

7. Moissonneuse-batteuse suivant une ou plusieurs des revendications précédentes, caractérisée en ce que le dispositif d'entraînement pour entraîner les doigts (100) est conformé en bâti d'entraînement qui est monté à rotation dans le carter de séparation (32) sur le vilebrequin (52), le bâti d'entraînement comportant des tringles d'entraînement (éléments glissants 132) disposés à distance radiale du vilebrequin (52).

8. Moissonneuse-batteuse suivant une ou plusieurs des revendications précédentes, caractérisée en ce que le rayon des cercles de révolution (152) formés par les bouts (105) des doigts (100) n'est pas inférieur au rayon du cercle de révolution des tringles d'entraînement (éléments glissants 132) plus le degré d'excentricité du vilebrequin.

9. Moissonneuse-batteuse suivant une ou plusieurs des revendications précédentes, caractérisée en ce que le bâti d'entraînement comporte au moins deux tringles d'entraînement (131, 132) diamétralement opposées et tourne sur un axe coaxial par rapport à l'axe du carter de séparation (32).

10. Moissonneuse-batteuse suivant une ou plusieurs des revendications précédentes, caractérisée en ce que le bâti d'entraînement est formé par des parois cylindriques (128) prévues entre les tringles d'entraînement, qui forment avec les tringles d'entraînement un tambour d'entraînement (56) entourant cylindriquement le vilebrequin (52).

11. Moissonneuse-batteuse suivant une ou plusieurs des revendications précédentes, caractérisée en ce que les tringles d'entraînement comportent des ouvertures oblongues (130) s'étendant axialement pour recevoir et guider les doigts (100).

12. Moissonneuse-batteuse suivant une ou plusieurs des revendications précédentes, caractérisée en ce que la largeur des ouvertures oblongues est suffisamment petite pour qu'un mouvement relatif en direction périphérique du tambour d'entraînement (56) entre les doigts (100) et les tringles d'entraînement soit empêché.

13. Moissonneuse-batteuse suivant une ou plusieurs des revendications précédentes, caractérisée en ce que les doigts (100) et le vilebrequin (52) sont disposés excentriquement de telle façon que les doigts s'étendent pendant la rotation dans une zone de travail ne dépassant pas 270° au-delà de la surface cylindrique (154).

14. Moissonneuse-batteuse suivant une ou plusieurs des revendications précédentes, caractérisée en ce que la section droite de vilebrequin (52) et celle de l'alésage de l'élément de support (74) pour la réception du vilebrequin (52) ne sont pas circulaires.

15. Moissonneuse-batteuse suivant une ou plusieurs des revendications précédentes, caractérisée en ce que la section droite de l'arbre (52), ainsi que de l'alésage, est formée par des surfaces prismatiques identiques.

16. Moissonneuse-batteuse suivant une ou plusieurs des revendications précédentes, caractérisée en ce que l'axe longitudinal du carter de séparation (32) et l'axe de rotation du bâti d'entraînement coïncident, et en ce que le vilebrequin (52) est disposé dans le carter de séparation (32) fixe en rotation.

*Fig. 1*

*Fig. 2*

*Fig. 3*

EP 0 173 225 B1

Fig. 4